# EUROPEAN PATENT APPLICATION

(11) **EP 4 187 672 A1**
(43) Date of publication of application: **31.05.2023**
(21) Application number: 21865488.7
(22) Date of filing: 24.02.2021
(51) Int. Cl.: H01M 10/42, H01M 4/62

(54) **ELECTROLYTE MATERIAL, PREPARATION METHOD THEREFOR AND USE THEREOF**

(30) Priority: 09.09.2020 CN 202010941959
(71) Applicant: SVOLT ENERGY TECHNOLOGY CO., LTD, Changzhou, Jiangsu 213200 (CN)
(72) Inventor: LV, Wenbin, hangzhou, Jiangsu 213200 (CN); DENG, Suxiang, hangzhou, Jiangsu 213200 (CN); CHEN, Shaojie, hangzhou, Jiangsu 213200 (CN)
(74) Representative: De Bonis, Paolo
(86) International application number: PCT/CN2021/077549
(87) International publication number: WO 2022/052425

(57) **Abstract**

Disclosed are an electrolyte material, a preparation method therefor and the use thereof. The electrolyte material comprises a core and a shell covering the outside of the core, wherein the core comprises flame retardant particles, and the shell comprises an ion-conductive polymer, with the ion-conductive polymer comprising a combination of a lithium salt and a polymer electrolyte.

## Description

### TECHNICAL FIELD

The present disclosure relates to the technical field of batteries, and for example, to an electrolyte material, a preparation method therefor and use thereof.

### BACKGROUND

With the rapid development and progress of society, the problems of energy shortage and environmental pollution have been increasingly serious, and there is more and more urgent need for clean energy; meanwhile, new energy vehicles are increasingly popular, and the development of energy power is gradually expanding, which requires the development of lithium-ion batteries with higher energy density. At present, commercial lithium batteries has hit an energy density bottleneck, and it is difficult to improve in terms of high energy density. As the next-generation battery, solid-state batteries have been pushed to the forefront, but solid-state batteries have lots of difficulty in developing, have high requirements on the process, and cannot achieve mass production at present; as a result, it gave a rise to semi-solid batteries as a transitional product.

Solid-state batteries can be divided into two main classes according to the prepare method: ① semi-solid batteries; ② all-solid-state batteries, in which, for the all-solid-state batteries, the positive and negative separators are in solid-solid contact, and the Li⁺ conduction has large resistance, so that the all-solid-state batteries are hard to reach the level of traditional liquid-state batteries currently; the semi-solid batteries, as an interim between traditional liquid-state batteries and all-solid-state batteries, are very close to the traditional liquid batteries in terms of preparation operability, battery rate capability and cycle performance, and even better than the traditional liquid batteries in safety performance.

Polymer solid electrolytes have attracted much attention as safe and low-density materials. However, there will appear a huge problem when adding polymer solid electrolytes to electrodes by traditional methods. Because the polymer electrolyte materials are very soft and have a relatively low Young's modulus, the electrode, which is added with the polymer electrolyte materials, will has great elongation during the rolling process of batteries due to the soft electrolyte, and the compaction density is difficult to improve.

There is a spate of spontaneous combustion of new energy vehicles, and people have been trying to develop novel batteries which are safer and more reliable. Since all-solid-state batteries have no electrolyte liquid, the cell can be more stable, and thus, the batteries attract widespread attention; however, currently, the all-solid-state battery technology is still immature, and there is still a long way to go before industrialization. As an intermediate product between liquid batteries and all-solid-state batteries, semi-solid batteries can reduce the amount of electrolyte liquid inside the cells and improve the cell safety to a certain extent, which are the closest and easiest interim product to mass production so far.

Electrolytes play a critical role during the thermal runaway process of lithium-ion batteries. At present, considering from the perspective of materials, there are many safety improvement strategies to prevent lithium-ion batteries from thermal runaway, fire, combustion and explosion, while the flame retardant electrolyte is the most economical, simple and effective one, which can effectively reduce the risk of thermal runaway, combustion and explosion for lithium-ion batteries, and greatly reduce the injury to personnel and property caused by thermal runaway; however, adding flame retardants to batteries often reduces the cycle performance and rate capability of the battery, and has great impact on the electrical performance of the battery, and if the addition amount is small, there will be a poor flame retardant effect; thus, the batteries added with flame retardant all have poor performance currently, and have difficulty to balance flame retardant performance and electrochemical performance.

CN105261742A discloses a sulfur-based semi-solid lithium battery and a preparation method thereof. The battery is formed by stacking a semi-solid sulfur-based positive electrode, a semi-solid electrolyte and a lithium sheet negative electrode; the semi-solid sulfur-based positive electrode is formed by first mixing a lithium salt-containing polymer, a sulfur-based material and a carbon conductive agent into a semi-solid state and then using an aluminum foil or a nickel mesh as a current collector; the semi-solid electrolyte formed by mixing a porous inorganic oxide and a lithium salt-containing polymer; the lithium salt-containing polymer is formed by mixing a fluid polymer and a lithium salt.

CN110265715A discloses a special gelling agent for semi-solid electrolytes of lithium batteries and a preparation method. The gelling agent is prepared by first mixing and grinding a polymer matrix, hydroxypropyl methylcellulose and a flame retardant to obtain composite particles, then mixing perhydropolysilazane, a porous inorganic substance and ammonia and spraying the same on the composite particle surface, and finally dispersing the coated composite particles and a dispersant completely by an airflow mixer.

Therefore, there is an urgent need in the art to develop an electrolyte material that can have both flame retardant performance and electrochemical performance.

### SUMMARY

A summary is described below for the subject detailed in the present disclosure. This summary is not intended to limit the protection scope of the claims.

The present disclosure provides an electrolyte material and a preparation method therefor and use thereof.

An embodiment of the present disclosure provides an electrolyte material, including a core and a shell coated outside the core, and the core includes flame retardant particles, and the shell includes an ion-conducting polymer;
the ion-conducting polymer includes a combination of a lithium salt and a polymer electrolyte.

In an embodiment of the present disclosure, a core-shell material is formed by coating a flame retardant with an ion-conductive polymer material, and the core-shell material is added to an electrode sheet; when the battery encounters safety problems, under mechanical abuse conditions such as acupuncture, compression and shock, or electrical abuse conditions such as overcharge and forced short circuit, or thermal abuse conditions such as hotbox and thermal shock, etc., the battery will generate heat due to internal short circuit; during the process of heat generation, the ion-conducting polymer electrolyte will melt and rupture, and release the flame retardant; the flame retardant exerts a flame retardant effect, and prevents the battery from thermal runaway in a short time, achieving the purpose of user departing safely; under normal service conditions, the flame retardant is wrapped by the polymer electrolyte, and will not affect cycle performance and rate capability of the battery, thereby having excellent electrochemical performance.

Additionally, the polymer electrolyte has good elasticity, which can reduce the swell of the negative electrode. Compared with the common electrode added with polymer electrolyte, which has difficulty in improving compaction density, in the present disclosure, the flame retardant@ion-conducting polymer electrolyte core-shell material, which applied to the semi-solid battery, improves the safety of the semi-solid battery, and meanwhile, facilitates polymer electrolyte fully dispersing in the electrode sheet, significantly increases the solid electrolyte content, guarantees a uniform distribution of the solid electrolyte, improves the lithium ion channels, guarantees the normal migration of lithium ions in the electrode sheet, has no impact on electrical performance of the battery, and also ensures that the electrode has a high compaction density, and the electrode sheet is not prone to high elongation.

The electrolyte material provided in an embodiment of the present disclosure is used in an electrode sheet, when the battery encounters safety problems, such as heat generation due to internal short circuit, during the process of heat generation, the ion-conducting polymer electrolyte will melt and rupture, and release the flame retardant; the flame retardant exerts a flame retardant effect, and prevents the battery from thermal runaway in a short time, achieving the purpose of user departing safely; under normal service conditions, the flame retardant is wrapped by the polymer electrolyte, and will not affect cycle performance and rate capability of the battery, thereby having excellent electrochemical performance.

The electrolyte material provided in an embodiment of the present disclosure is used in an electrode sheet, which can improve the compaction density and reduce the swell of the negative electrode at the same time.

In an embodiment, a mass proportion of the flame retardant is 5-20% in the electrolyte material, for example, 6%, 7%, 8%, 9%, 10%, 11%, 12%, 13%, 14%, 15%, 16%, 17%, 18%, 19%, etc.; in an embodiment, the mass proportion of the flame retardant is 10% in the electrolyte material.

In an embodiment provided in the present disclosure, the proportion of the flame retardant is 5-20%, so as to obtain a no-fire effect in the acupuncture and hotbox experiments; with the too low proportion, fire will occur, and with the too high proportion, battery capacity will be reduced.

In an embodiment, a diameter of the core is 0.5-10 µm, for example, 1 µm, 2 µm, 3 µm, 4 µm, 5 µm, 6 µm, 7 µm, 8 µm, 9 µm, etc.

In an embodiment, a thickness of the shell is 100-500 nm, for example, 150 nm, 200 nm, 250 nm, 300 nm, 350 nm, 400 nm, 450 nm, etc..

In an embodiment, the flame retardant includes any one or a combination of at least two of trimethyl phosphate (TMP), triethyl phosphate (TEP), tributyl phosphate (TBP), tris(2,2,2-trifluoroethyl) phosphite (TFP), triphenyl phosphate (TPP), phosphite or phosphazene flame retardant materials.

In an embodiment, the lithium salt accounts for 1-20% of a mass of the ion-conducting polymer, for example, 2%, 3%, 4%, 5%, 6%, 7%, 8%, 9%, 10%, 11%, 12%, 13%, 14%, 15%, 16%, 17%, 18%, 19%, etc.; in an embodiment, the lithium salt accounts for 12% of the mass of the ion-conducting polymer.

In an embodiment, the lithium salt includes any one or a combination of at least two of lithium perchlorate (LiClO₄), lithium bis(trifluoromethanesulfonyl)imide (LiTFSI), lithium bis(fluorosulfonyl)imide (LiFSI), lithium bis(oxalato)borate (LiBOB) or lithium tetrafluoroborate (LiBF₄).

In an embodiment, a melting temperature of the polymer electrolyte is 150-250°C, for example, 160°C, 170°C, 180°C, 190°C, 200°C, 210°C, 220°C, 230°C, 240°C, etc.; in an embodiment, the melting temperature of the polymer electrolyte is 200°C.

In an embodiment provided in the present disclosure, the above melting temperature is selected, so that the electrolyte converts to a liquid after melting; with the too low melting temperature, the polymer electrolyte will be non-liquid, and cannot coated on the flame retardant uniformly, and with the too high melting temperature, the polymer electrolyte will be oxidized and decomposed.

In an embodiment, the polymer electrolyte includes any one or a combination of at least two of polyethylene oxide (PEO), polyacrylonitrile (PAN), polymethyl methacrylate (PMMA), polyvinylidene difluoride (PVdF), polyethylene glycol (PEG), polyethylene glycol diacrylate (PEGDA) or polyvinylene carbonate (PVCA).

In an embodiment provided by the present disclosure, because the polymer electrolyte contains the same molecular chain segments as the binder commonly used in the electrode slurry, it has better affinity with the binder and flexibility, and has better bonding performance between electrode active substances. The polymer electrolyte contains the same chain segments as the binder, and the same chain segments are entangled with each other, which will reduce the swell of the silicon negative electrode. Meanwhile, the polymer electrolyte is incompatible with the electrolyte, and cannot be dissolved in the electrolyte, which protects the electrolyte from becoming more viscous due to the dissolution of the polymer, and prevents the electrical conductivity reduction and rate capability and cycle performance deterioration.

In an embodiment, an emulsifier exists between the flame retardant particles and the ion-conducting polymer.

In an embodiment, the emulsifier is deposited on the surface of the flame retardant particles.

In an embodiment, the emulsifier is deposited on the surface of the flame retardant particles, because the emulsifier surface has hydrophilic and lipophilic groups, and the emulsifier can be used to facilitate polymer electrolyte binding with the flame retardant microspheres thus obtaining a uniform and dense effect of the coating.

In an embodiment, the emulsifier includes any one or a combination of at least two of polyethylene glycol, sodium dodecyl sulfonate, fatty acid polyoxyethylene ether, Gum Arabic, sodium alkylbenzenesulfonate, isostearic acid monoglyceride, a polyethylene oxide-polypropylene oxide copolymer, cetyltrimethylammonium bromide, a styrene maleic anhydride copolymer, a nonionic micro-emulsifier paraffin (NMP), a cationic micro-emulsifier paraffin (CMP), an anionic emulsifier paraffin (AMP), OP-10, OP-15, peregal O-10, a water-in-oil emulsifier of waste engine oil (EEO), a water-in-oil emulsifier of diesel oil (EDO) or a water-in-oil emulsifier of animal-plant oil (EAP).

An embodiment of the present disclosure provides a preparation method of the electrolyte material according to an embodiment of the present disclosure, including: mixing a flame retardant dispersion liquid, a polymer monomer, a lithium salt and an initiator, and dispersing the same, so as to obtain a mixed solution, and stirring and heating the mixed solution, and keeping the mixed solution at a temperature to react, so as to obtain the electrolyte material.

The preparation method of the electrolyte material provided in an embodiment of the present disclosure can prepare an electrolyte material with a core-shell structure, and the preparation method has simple operation, inexpensive materials, significant flame retardant effect and no impact on other performances of the battery.

In an embodiment, the preparation method is performed in an argon atmosphere.

In an embodiment, the preparation method further includes using a reflux condensing device.

In an embodiment, a temperature is 80-90°C for the dispersing, for example, 81°C, 82°C, 83°C, 84°C, 85°C, 86°C, 87°C, 88°C, 89°C, etc.

In an embodiment, the initiator includes at least one of azobisisobutyronitrile (AIBN) or azobisisoheptanenitrile (V65).

In an embodiment, based on that a total mass of the polymer monomer, the lithium salt and the initiator is 100%, a mass proportion of the polymer monomer is 70-90%, for example, 72%, 74%, 76%, 78%, 80%, 82%, 84%, 86%, 88%, etc.; in an embodiment, based on that a total mass of the polymer monomer, the lithium salt and the initiator is 100%, the mass proportion of the polymer monomer is 80%.

In an embodiment, based on that a total mass of the polymer monomer, the lithium salt and the initiator is 100%, a mass proportion of the lithium salt is 10-30%, for example, 11%, 12%, 13%, 14%, 15%, 16%, 17%, 18%, 19%, 20%, 21%, 22%, 23%, 24%, 25%, 26%, 27%, 28%, 29%, etc.; in an embodiment, based on that a total mass of the polymer monomer, the lithium salt and the initiator is 100%, the mass proportion of the lithium salt is 19.5%.

In an embodiment, based on that a total mass of the polymer monomer, the lithium salt and the initiator is 100%, a mass proportion of the initiator is 0.2-1%, for example, 0.3%, 0.4%, 0.5%, 0.6%, 0.7%, 0.8%, 0.9%, etc.; in an embodiment, based on that a total mass of the polymer monomer, the lithium salt and the initiator is 100%, the mass proportion of the initiator is 0.5%.

In an embodiment, a temperature is 60-80°C for the heating, for example, 62°C, 64°C, 66°C, 68°C, 70°C, 72°C, 74°C, 76°C, 78°C, etc.

In an embodiment, a time is 2-5 h for the keeping the mixed solution at a temperature to react, for example, 2 h, 3 h, 4 h, etc..

In an embodiment, a preparation method of the flame retardant dispersion liquid includes: mixing a flame retardant and a dispersant, and dispersing the same, so as to obtain the flame retardant dispersion liquid.

In an embodiment, the dispersant includes an organic liquid or an inorganic liquid, which has a boiling point of more than 100°C, and cannot react with the flame retardant or dissolve the flame retardant.

In an embodiment, a temperature is 20-30°C for the dispersing in the preparation method of the flame retardant dispersion liquid, for example, 21°C, 22°C, 23°C, 24°C, 25°C, 26°C, 27°C, 28°C, 29°C, etc.

In an embodiment, a particle size of the flame retardant is 0.1 µm-10 µm in the flame retardant dispersion liquid, for example, 1 µm, 2 µm, 3 µm, 4 µm, 5 µm, 6 µm, 7 µm, 8 µm, 9 µm, etc.

In an embodiment, the preparation method includes emulsifying the flame retardant dispersion liquid before the mixing a flame retardant dispersion liquid, a polymer monomer, a lithium salt and an initiator.

In an embodiment, a method for the emulsifying includes: adding an emulsifier solution to the flame retardant dispersion liquid, and performing emulsification.

In an embodiment, the emulsifier includes any one or a combination of at least two of polyethylene glycol, sodium dodecyl sulfonate, fatty acid polyoxyethylene ether, Gum Arabic, sodium alkylbenzenesulfonate, isostearic acid monoglyceride, a polyethylene oxide-polypropylene oxide copolymer, cetyltrimethylammonium bromide, a styrene maleic anhydride copolymer, a nonionic micro-emulsifier paraffin (NMP), a cationic micro-emulsifier paraffin (CMP), an anionic emulsifier paraffin (AMP), OP-10, OP-15, peregal O-10, a water-in-oil emulsifier of waste engine oil (EEO), a water-in-oil emulsifier of diesel oil (EDO) or a water-in-oil emulsifier of animal-plant oil (EAP).

In an embodiment, the method for the performing emulsification includes: with a diluted 10% emulsifier, a flame retardant and deionized water for emulsification treatment, performing emulsification at a rotational speed of 10000-15000 r/min for 30 min.

In an embodiment, the preparation method includes adjusting pH of the flame retardant dispersion liquid to 3-4 before the mixing a flame retardant dispersion liquid, a polymer monomer, a lithium salt and an initiator.

In an embodiment, a method for the adjusting pH includes performing adjusting by using an acetic acid solution; in an embodiment, the method of adjusting pH includes performing adjusting by using a 10% acetic acid solution.

In an embodiment, the preparation method further includes: after the keeping the mixed solution at a temperature to react, performing drying, so as to obtain an electrolyte material in a form of powder particles.

In an embodiment, the drying is performed in an argon atmosphere.

In an embodiment, a temperature is 70-90°C for the drying, for example, 72°C, 74°C, 76°C, 78°C, 80°C, 82°C, 84°C, 86°C, 88°C, etc.; in an embodiment, the temperature is 80°C for the drying.

In an embodiment, a time is 20-30 h for the drying, for example, 22 h, 24 h, 26 h, 28 h, etc.; in an embodiment, the time is 24 h for the drying.

In an embodiment, the preparation method includes storing the electrolyte material in a form of powder particles in an argon atmosphere.

In an embodiment, the preparation method includes the following steps:
(1) mixing a flame retardant and a dispersant, and dispersing the same at 20-30°C, so as to obtain a flame retardant dispersion liquid in which the flame retardant has a particle size of 0.1 µm-10 µm;
(2) adding an emulsifier solution to the flame retardant dispersion liquid, and performing emulsification treatment by using distilled water;
(3) adjusting pH of the flame retardant dispersion liquid to 3-4 by using a 10% acetic acid solution;
(4) mixing the flame retardant dispersion liquid, a polymer monomer, a lithium salt and an initiator, and dispersing the same at 80-90°C, so as to obtain a mixed solution in which the polymer monomer has a content of 70-90%, the lithium salt has a content of 10-30%, and the initiator has a content of 0.2-1%;
(5) stirring and heating the mixed solution to 60-80°C, and keeping the mixed solution at a temperature to react for 2-5 h, so as to obtain the electrolyte material;
(6) drying the material at 70-90°C for 20-30 h, so as to obtain an electrolyte material in a form of powder particles;
the steps (1) to (6) are all performed in an argon atmosphere.

An embodiment of the present disclosure provides an electrode slurry including the electrolyte material according to an embodiment of the present disclosure.

In an embodiment, the electrode slurry includes a positive electrode slurry or a negative electrode slurry.

In an embodiment, a mass percentage of the electrolyte material is 1-20% in the electrode slurry, for example, 2%, 3%, 4%, 5%, 6%, 7%, 8%, 9%, 10%, 11%, 12%, 13%, 14%, 15%, 16%, 17%, 18%, 19%, etc..

In an embodiment, the electrode slurry includes a binder.

In an embodiment, the binder includes any one or a combination of at least two of polyvinylidene difluoride (PVDF), polyvinylpyrrolidone (PVP), styrene butadiene rubber (SBR), hydroxymethyl cellulose (CMC), polyacrylic acid (PAA), polyethylene oxide (PEO), polyacrylonitrile (PAN), chitosan series, sodium alginate series or natural binder series (Binder).

In an embodiment, the preparation method of the electrode slurry includes adding the electrolyte material according to an embodiment of the present disclosure during the slurry homogenization process.

The present disclosure has no specific limitation on the slurry homogenization method or the addition order of the electrolyte material, and merely provides a slurry homogenization method of the positive electrode slurry and a slurry homogenization method of the negative electrode slurry, in which the slurry homogenization method of the positive electrode slurry includes methods shown in FIG. 1 and FIG. 2, and the negative electrode slurry includes methods shown in FIG. 3, FIG. 4 and FIG. 5. Those skilled in the art can prepare the slurry according to the aforementioned methods, or prepare the slurry according to other methods.

An embodiment of the present disclosure provides an electrode sheet coated with the electrolyte slurry according to an embodiment of the present disclosure on its surface.

In an embodiment, the electrode sheet includes a positive electrode sheet or a negative electrode sheet.

In an embodiment, a base material of the electrode sheet includes an aluminum foil or a copper foil.

In an embodiment, a preparation method of the electrode sheet includes: coating a base material with the electrode slurry according to an embodiment of the present disclosure, and then rolling the same.

In an embodiment, a thickness is 0.1-100 µm for the coating, for example, 1 µm, 10 µm, 20 µm, 30 µm, 40 µm, 50 µm, 60 µm, 70 µm, 80 µm, 90 µm, etc..

In an embodiment, a width is 0.1-1000 mm for the coating, for example, 20 mm, 50 mm, 100 mm, 200 mm, 300 mm, 400 mm, 500 mm, 600 mm, 700 mm, 800 mm, 900 mm, etc..

In an embodiment, a surface density is 0.1 mg/cm²-100 mg/cm² for the coating, for example, 2 mg/cm², 10 mg/cm², 20 mg/cm², 30 mg/cm², 40 mg/cm², 50 mg/cm², 60 mg/cm², 70 mg/cm², 80 mg/cm², 90 mg/cm², etc.; in an embodiment, the surface density is 5 mg/cm² for the coating.

In an embodiment, a method for the coating includes any one or a combination of at least two of blade coating, transfer coating or extrusion coating; in an embodiment, the coating method includes transfer coating.

In an embodiment, the rolling is performed under a dry condition.

In an embodiment, a dew point temperature is less than or equal to -50°C for the drying, for example, -60°C, -70°C, -80°C, etc..

In an embodiment, a temperature is 180°C-250°C for the rolling, for example, 190°C, 200°C, 210°C, 220°C, 230°C, 240°C, etc.; in an embodiment, the temperature is 180°C for the rolling.

In an embodiment, a pressure is 50 MPa-500 MPa for the rolling, for example, 100 MPa, 200 MPa, 300 MPa, 400 MPa, etc.; in an embodiment, the pressure is 300 MPa for the rolling.

In an embodiment, a roller diameter is 0.1 mm-1000 mm for the rolling, for example, 10 mm, 10 mm, 100 mm, 200 mm, 300 mm, 400 mm, 500 mm, 600 mm, 700 mm, 800 mm, 900 mm, etc.; in an embodiment, the roller diameter is 500 mm for the rolling.

In an embodiment, a thickness of the electrode slurry is 0.1-50 µm after rolling, for example, 5 µm, 10 µm, 15 µm, 20 µm, 25 µm, 30 µm, 35 µm, 40 µm, 45 µm, etc.

In an embodiment, in the positive electrode sheet, a compaction density is 2.6-4.0 mg/cm³ for the rolling, for example, 2.8 mg/cm³, 3 mg/cm³, 3.2 mg/cm³, 3.4 mg/cm³, 3.6 mg/cm³, 3.8 mg/cm³, etc.; in an embodiment, in the positive electrode sheet, the compaction density is 3.6 mg/cm³ for the rolling.

In an embodiment, in the negative electrode sheet, a compaction density is 1.0-1.8 mg/cm³ for the rolling, for example, 1.1 mg/cm³, 1.2 mg/cm³, 1.3 mg/cm³, 1.4 mg/cm³, 1.5 mg/cm³, 1.6 mg/cm³, 1.7 mg/cm³, etc.; in an embodiment, in the negative electrode sheet, the compaction density is 1.6 mg/cm³ for the rolling.

An embodiment of the present disclosure provides a battery cell including the electrode sheet according to an embodiment of the present disclosure.

In an embodiment, the battery cell is a semi-solid battery cell.

An embodiment of the present disclosure provides a battery including the battery cell according to an embodiment of the present disclosure.

During the use of the battery provided in an embodiment of the present disclosure, the flame retardant@ion-conducting polymer electrolyte core-shell material will not be oxidized by the high potential of the positive electrode or reduced by the low voltage of the negative potential at the positive and negative electrodes. The ion-conducting polymer electrolyte core structure can conduct lithium ions, and the addition of electrolyte material will not reduce rate capability of the battery. In the process of thermal abuse, electrical abuse, and mechanical abuse, the battery heats up, the core-shell structure is heated, melts and ruptures, and the flame retardant overflows, which plays the role of flame retardant and fire extinguishing, having great significance in safety.

In an embodiment, the battery is a semi-solid battery.

In an embodiment, the battery is a lithium battery.

In the present disclosure, the semi-solid battery can be assembled by many ways, the electrode sheets can be assembled by lamination or winding, and there is no limitation on the method of battery assembling; after assembly, the battery is subjected to liquid injection, and after the liquid injection, the battery is aged at a high temperature of 45°C for 24 hours, and then, the battery is subjected to formation, and there is no limitation on the liquid injection and formation process; the assembled battery can be a pouch battery, or a square aluminum-case battery, or a cylindrical battery; in an embodiment, the assembled battery is a pouch battery.

An embodiment of the present disclosure provides use of the battery according to an embodiment of the present disclosure, and the battery is used in an electronic product or a new energy vehicle.

Other aspects will become apparent upon reading and understanding of the accompanying drawings and detailed description.

### BRIEF DESCRIPTION OF DRAWINGS

The accompanying drawings are used to provide a further understanding of the technical solutions of the present disclosure, constitute a part of the description, explain the technical solutions of the present disclosure in conjunction with examples of the present application, and have no limitation on the technical solutions of the present disclosure.

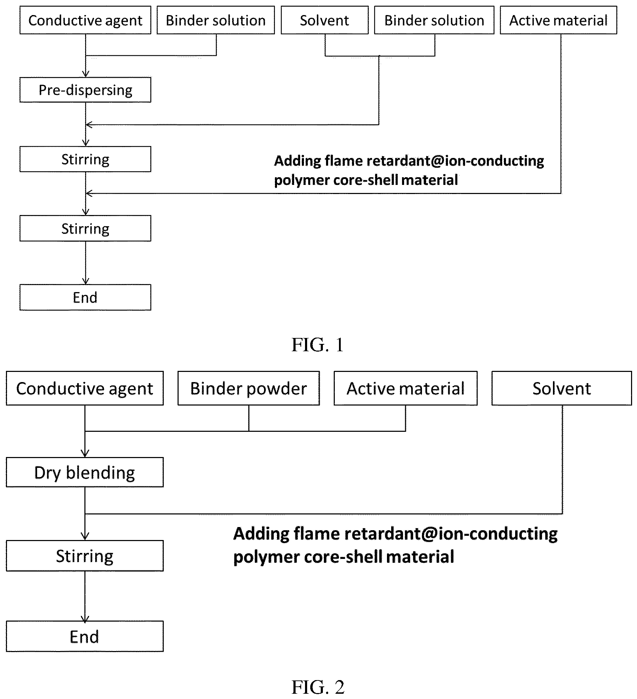

FIG. 1 shows a slurry homogenization method of positive electrode slurry in an example of the present disclosure.
FIG. 2 shows a slurry homogenization method of positive electrode slurry in an example of the present disclosure.

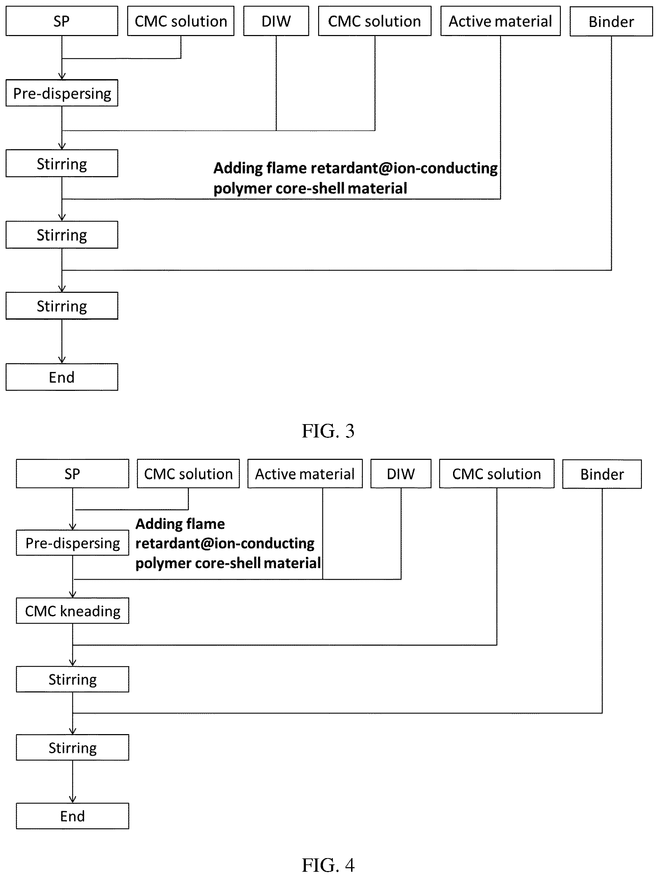

FIG. 3 shows a slurry homogenization method of negative electrode slurry in an example of the present disclosure.
FIG. 4 shows a slurry homogenization method of negative electrode slurry in an example of the present disclosure.

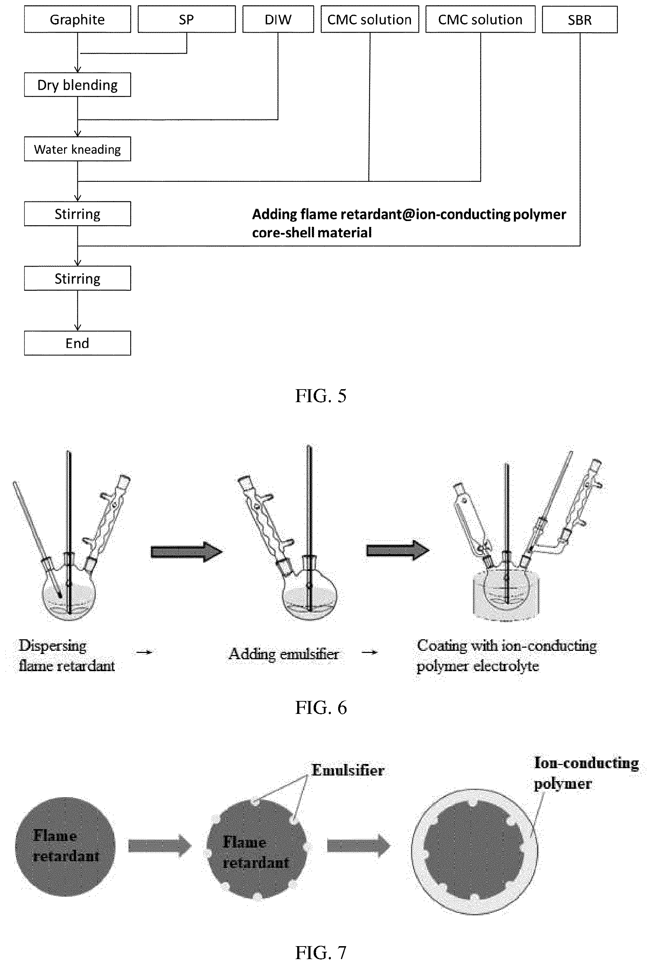

FIG. 5 shows a slurry homogenization method of negative electrode slurry in an example of the present disclosure.
FIG. 6 is a schematic diagram of a preparation process of an electrolyte material in an example of the present disclosure.
FIG. 7 is a schematic diagram of morphological change of an electrolyte material in an example of the present disclosure.

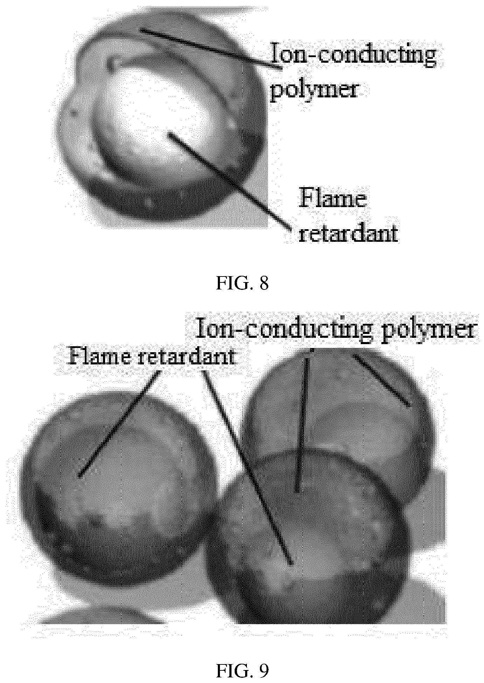

FIG. 8 is a schematic diagram of an internal layered structure of an electrolyte material in an example of the present disclosure.
FIG. 9 is a schematic diagram of an external layered structure of an electrolyte material in an example of the present disclosure.

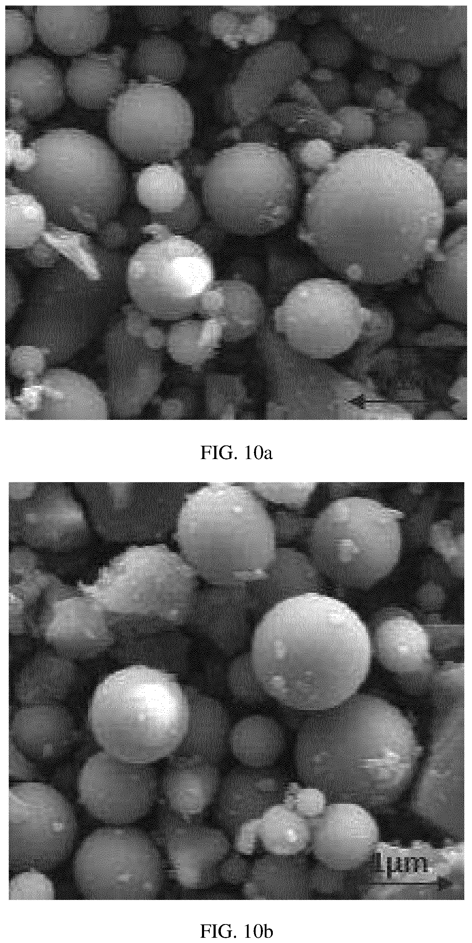

FIG. 10a is an SEM image of an electrolyte material in an example of the present disclosure.
FIG. 10b is an SEM image of an electrolyte material in an example of the present disclosure.

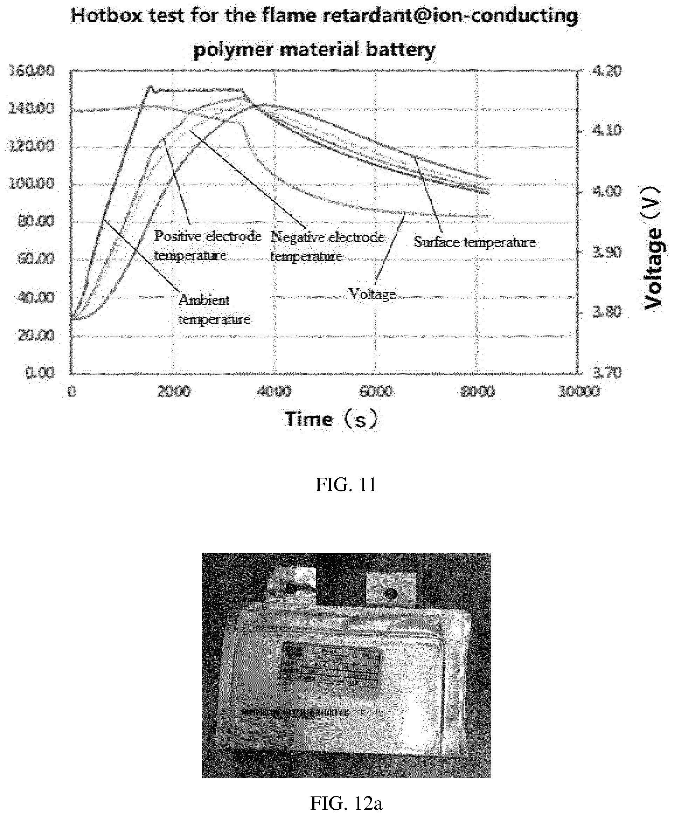

FIG. 11 is a graph showing the temperature-voltage test data of a 5Ah nickel-cobalt-manganese-graphite (NCM-Gr) cell in an application example of the present disclosure after tested by a hotbox experiment at 150°C.
FIG. 12a shows a state image of a 5Ah NCM-Gr battery cell in an application example of the present disclosure after tested by a hotbox experiment at 150°C.

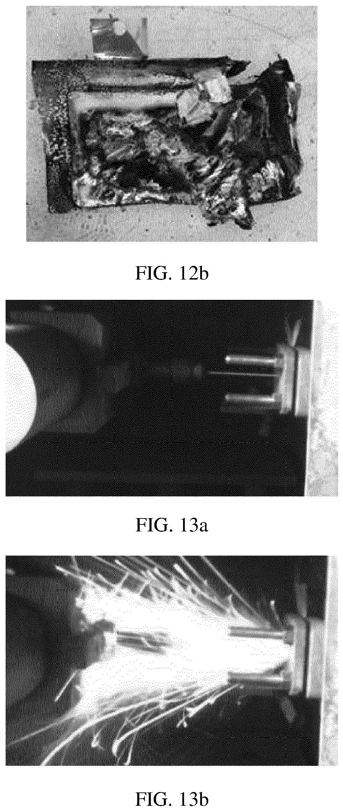

FIG. 12b shows a state image of a 5Ah NCM-Gr battery cell in a comparative example of the present disclosure after tested by a hotbox experiment at 150°C.
FIG. 13a is a comparison image of acupuncture safety of a 5Ah NCM-Gr battery cell in an application example of the present disclosure.
FIG. 13b is a comparison image of acupuncture safety of a 5Ah NCM-Gr battery cell in a comparative application example.

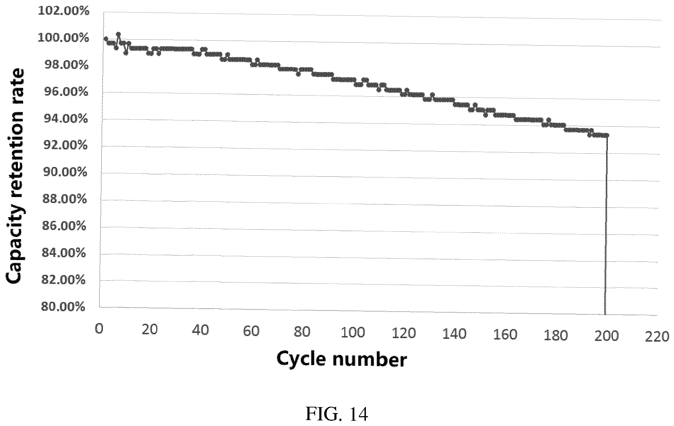

FIG. 14 is a graph showing the 1C cycle life data of a 5Ah NCM-Gr battery cell in an application example of the present disclosure.

### DETAILED DESCRIPTION

The technical solutions of the present disclosure will be further described below with reference to the accompanying drawings and through specific embodiments.

### Example 1

This example provides an electrolyte material (a flame retardant@ion-conducting polymer electrolyte core-shell material), a preparation method of which is as follows (the following steps were all performed in an argon atmosphere, and a condensing reflux device was used, as shown in FIG. 6):
(1) 10 g of a flame retardant (ethoxy pentafluorocyclophosphazene) and 30 g of a dispersant (deionized water) were mixed, and dispersed at 25°C, so as to obtain a flame retardant dispersion liquid (with a particle size of 5 µm);
(2) the flame retardant dispersion liquid was added with 1 g of an emulsifier solution (a 10% OP-10 aqueous solution), and subjected to emulsification treatment by using distilled water;
(3) pH of the flame retardant dispersion liquid was adjusted to 3-4 by using a 10% acetic acid solution;
(4) the flame retardant dispersion liquid, a polymer monomer (vinylene carbonate), a lithium salt (LITFSI) and an initiator (azobisisobutyronitrile) were mixed, and dispersed at 85°C, so as to obtain a mixed solution in which the polymer monomer had a content of 80%, the lithium salt had a content of 19.5%, and the initiator had a content of 0.5% (based on that a total mass of the polymer monomer, the lithium salt and the initiator was 100%);
(5) the mixed solution was stirred and heated to 70°C, and kept at the temperature to react for 4 h, so as to obtain the electrolyte material;
(6) the material was dried at 80°C for 24 h, so as to obtain an electrolyte material in a form of powder particles (with a core of the flame retardant and a shell of polyvinylene carbonate (with a melting temperature of 180°C), and containing the flame retardant with a mass proportion of 10%).

The preparation process in this example included that, on the surface of the flame retardant particles, an emulsifier was first deposited, and then an ion-conducting polymer was coated, as shown in FIG. 7.

For the flame retardant@ion-conducting polymer electrolyte core-shell material prepared in this example, the schematic diagram of the internal layered structure is shown in FIG. 8, the schematic diagram of the external structure is shown in FIG. 9, and the SEM images are shown in FIG. 10a and FIG. 10b.

### Example 2

This example provides an electrolyte material, a preparation method of which is as follows (the following steps were all performed in an argon atmosphere):
(1) 10 g of a flame retardant (hexafluorocyclophosphazene) and 30 g of a dispersant (deionized water) were mixed, and dispersed at 25°C, so as to obtain a flame retardant dispersion liquid (with a particle size of 0.1 µm);
(2) the flame retardant dispersion liquid was added with 1 g of an emulsifier solution (a 10% OP-10 aqueous solution), and subjected to emulsification treatment by using distilled water;
(3) pH of the flame retardant dispersion liquid was adjusted to 3-4 by using a 10% acetic acid solution;
(4) the flame retardant dispersion liquid, a polymer monomer (acrylonitrile), a lithium salt (LITFSI) and an initiator (azobisisobutyronitrile) were mixed, and dispersed at 80°C, so as to obtain a mixed solution in which the polymer monomer had a content of 70%, the lithium salt had a content of 29%, and the initiator had a content of 1% (based on that a total mass of the polymer monomer, the lithium salt and the initiator was 100%);
(5) the mixed solution was stirred and heated to 60°C, and kept at the temperature to react for 5 h, so as to obtain the electrolyte material.
(6) the material was dried at 70°C for 30 h, so as to obtain an electrolyte material in a form of powder particles (with a core of the flame retardant and a shell of polyacrylonitrile (with a melting temperature of 205°C), and containing the flame retardant with a mass proportion of 10%).

### Example 3

This example provides an electrolyte material, a preparation method of which is as follows (the following steps were all performed in an argon atmosphere):
(1) 10 g of a flame retardant (tris(2,2,2-trifluoroethyl) phosphite) and 30 g of a dispersant (anhydrous ethanol) were mixed, and dispersed at 30°C, so as to obtain a flame retardant dispersion liquid (with a particle size of 10 µm);
(2) the flame retardant dispersion liquid was added with 1 g of an emulsifier solution (a 10% OP-10 aqueous solution), and subjected to emulsification treatment by using distilled water;
(3) pH of the flame retardant dispersion liquid was adjusted to 3-4 by using a 10% acetic acid solution;
(4) the flame retardant dispersion liquid, a polymer monomer (specifically, methyl methacrylate), a lithium salt (specifically, LiTFSI) and an initiator (specifically, azobisisobutyronitrile) were mixed, and dispersed at 90°C, so as to obtain a mixed solution in which the polymer monomer had a content of 89.8%, the lithium salt had a content of 10%, and the initiator had a content of 0.2% (based on that a total mass of the polymer monomer, the lithium salt and the initiator was 100%);
(5) the mixed solution was stirred and heated to 70°C, and kept at the temperature to react for 4 h, so as to obtain the electrolyte material.
(6) the material was dried at 80°C for 24 h, so as to obtain an electrolyte material in a form of powder particles (with a core of the flame retardant and a shell of polymethyl methacrylate (with a melting temperature of 196°C), and containing the flame retardant with a mass proportion of 10%).

### Example 4

This example differs from Example 1 in that, in step (4), a polymer monomer used was vinylethylene carbonate, and a polymer electrolyte obtained was polyvinylethylene carbonate (with a melting temperature of 210°C).

### Example 5

This example differs from Example 1 in that, in step (4), a polymer monomer used was triethylene glycol diacrylate, and a polymer electrolyte obtained was polytriethylene glycol diacrylate (with a melting temperature of 250°C).

### Example 6

This example differs from Example 1 in that, in step (4), a polymer monomer used was 1,6-hexanediol diacrylate, and a polymer electrolyte obtained was poly-1,6-hexanediol diacrylate (with a melting temperature of 140°C).

### Example 7

This example differs from Example 1 in that, in step (4), a polymer monomer used was pentaerythritol tetraacrylate, and a polymer electrolyte obtained was polypentaerythritol tetraacrylate (with a melting temperature of 260°C).

### Examples 8-11

Examples 8-11 differ from examples in that a mass proportion of the flame retardant in the electrolyte material was 5% (Example 8), 20% (Example 9), 3% (Example 10) and 25% (Example 11), respectively.

### Comparative Example 1

Comparative Example 1 differs from Example 4 in that a preparation method of the electrolyte material is as follows:
(1) 3 g of a flame retardant (ethoxy pentafluorocyclophosphazene), 30 g of a polymer electrolyte (polyvinylethylene carbonate, with a melting temperature of 210°C) and a lithium salt (specifically, LITFSI) were mixed, and dispersed at 85°C, so as to obtain a mixed solution in which the polymer electrolyte had a content of 80%, the lithium salt had a content of 19.5%, and the initiator had a content of 0.5% (based on that a total mass of the polymer electrolyte, the lithium salt and the initiator was 100%), and based on that a total mass of the flame retardant and the polymer electrolyte was 100%, a mass percentage of the flame retardant was 10%; a simple blended material of the polymer electrolyte and the flame retardant was obtained.

### Application Examples 1-11, and Comparative Application Example 1

The above application examples separately prepared a semi-solid battery cell, using the electrolyte materials in Examples 1-11 and Comparative Example 1, respectively, and a specific method is as follows:
(1) positive electrode slurry: prepared according to the method shown in FIG. 1, a positive electrode slurry was obtained with an electrolyte material content of 10%;
(2) negative electrode slurry: prepared according to the method shown in FIG. 3, a negative electrode slurry was obtained with an electrolyte material content of 10%;
(3) positive electrode sheet: the prepared positive electrode slurry was coated on an aluminum foil, in which a coating thickness was 50 µm, a coating width was 500 mm, and a coating length was 10 m; a coating surface density: 5 mg/cm²; a coating method: transfer coating; rolling under a dry condition of dew point being -50°C, in which a rolling temperature was 180°C, a pressure was 300 Mpa, a roller diameter was 500 mm, a thickness was 25 µm after rolling, and a compaction density was 3.6 mg/cm³;
(4) negative electrode sheet: the prepared negative electrode slurry was coated on an aluminum foil, in which a coating thickness was 50 µm, a coating width was 500 mm, and a coating length was 10 m; a coating surface density: 5 mg/cm²; a coating method: transfer coating; rolling under a dry condition of dew point being -50°C, in which a rolling temperature was 180°C, a pressure was 300 Mpa, a roller diameter was 500 mm, a thickness was 25 µm after rolling, and a compaction density was 1.6 mg/cm³.
(5) semi-solid battery (pouch-type): the positive and negative electrode sheets were assembled by laminating; after assembly, the battery was subjected to liquid injection; after the liquid injection, the battery was aged at a high temperature of 45°C for 24 hours; and then, the battery was subjected to formation, so as to obtained a finished product (5 Ah NCM-Gr battery cell).

### Comparative Application Example 2

Comparative Application Example 2 differs from Application Example 1 in that no electrolyte material was added in step (1) and step (2).

FIG. 11 is the graph showing the temperature-voltage test data of the 5Ah NCM-Gr cell in Application Example 1 after tested by a hotbox experiment at 150°C. The figure shows that the NCM-Gr cell added with flame retardant@ion-conducting polymer can successfully pass the hotbox test at 150°C, proving this material has flame retardant properties.

FIG. 12a and FIG. 12b are the state images of the 5Ah NCM-Gr battery cells in Application Example 1 and Comparative Application Example 2 after tested by the hotbox at 150°C, respectively. FIG. 12a shows a basically undamaged state, while FIG. 12b shows a burned state, proving that the electrolyte material provided in the present disclosure can effectively improve the flame retardant performance of batteries and has higher safety.

FIG. 13a and FIG. 13b are the comparison images showing acupuncture safety of the 5Ah NCM-Gr battery cells in Application Example 1 and Comparative Application Example 2, respectively. FIG. 13a shows that the cell can successfully pass the acupuncture, while FIG. 13b shows that a fire occurred during the acupuncture, further proving that the electrolyte material of the present application can effectively improve the flame retardant performance of batteries.

FIG. 14 is the graph showing the 1C cycle life data of the 5Ah NCM-Gr battery cell in Application Example 1. The figure shows that, after 200 cycles, the capacity retention rate was still 93.7%, proving that the electrolyte material provided in the present disclosure can obtain good cycle performance when applied to batteries.

### Performance Testing

The performance tests described below were performed on the 5Ah NCM-Gr cells obtained from the above application examples and comparative application examples separately.
(1) Flame retardant performance test: performing the test based on acupuncture and hotbox;
   Safety (acupuncture test) conditions:
   with reference to GBT31485-2015 Safety requirements and test methods for traction battery of electric vehicle, the steps are as follows:
   a) a single cell battery was charged;
   b) with a ϕ6.5 mm high-temperature resistance steel needle (a cone angle of the needle tip was 50°, and the needle surface was smooth and had no rust, oxide layer or oil stains), the cell was penetrated at a speed of 25 mm/s from a direction perpendicular to the storage battery plate, the penetration position was close to the geometric center of the pierced surface, and the steel needle stayed in the battery;
   c) observation for 1 h.

(1) Flame retardant performance test: performing the test based on acupuncture and hotbox;
   Safety (hotbox test) conditions:
   a) a single cell battery was charged;
   b) the single cell battery was put into a temperature box, and for lithium-ion batteries, the temperature box was raised from room temperature to 150±2°C at a rate of 5°C/min, kept the temperature for 30 min and then stopped heating; and
   c) observation for 1 h.
(2) Cycle performance test:
   Initial efficiency test conditions: at an ambient temperature of 25°C;
      a) constant-current and constant-voltage charging: a cell was charged by constant current (CC) at 0.05C for 22 h to 4.25V, and then charged by constant voltage (CV) to 0.01C;
      b) standing for 10 min;
      c) constant-current discharging (DC): the cell was discharged by constant current (DC) at 0.05C to 2.5V.
   Cycle performance test conditions: at a test temperature of 25°C;
      a) constant-current and constant-voltage charging: a cell was charged by constant current (CC) at 1C to 4.25V, and then charged by constant voltage (CV) to 0.05C;
      b) standing for 5 min; c) constant-current discharging: the cell was discharged by constant current (DC) at 1C to 2.5V;
      d) step a)-step c) were performed circularly for 100 times.
(3) Rate capability test:

### Test Conditions:

a) constant-current and constant-voltage charging: a cell was charged by constant current (CC) at 0.33C for 4 h to 4.25V, and then charged by constant voltage (CV) to 0.05C;
b) standing for 5 min;
c) constant-current discharging: the cell was discharged by constant current (DC) at 0.33C to 2.5V;
d) the cell was left standing for 5 min;
e) constant-current and constant-voltage charging: the cell was charged by constant current (CC) at 0.33C for 4 h to 4.25V, and then charged by constant voltage (CV) to 0.05C;
f) standing for 5 min;
g) constant-current discharging: the cell was discharged by constant current (DC) at 1C to 2.5V.

The rate capability at 1C/0.33C was obtained by the test, and under other conditions, for example, 0.1C/0.1C, 0.33C/0.33C, 0.33/0.5C, 0.33/2C, etc., the test parameters of rate capability refer to the above conditions.

The above test results are shown in Table 1.

**Table 1**

| | Flame Retardant Performance | Cycle Performance (100 cycles) | Rate capability (1C/0.33C) |
|---|---|---|---|
| Application Example 1 | Passed the acupuncture and hotbox tests | 97.8% | 90.8% |
| Application Example 2 | Passed the acupuncture and hotbox tests | 85.3% | 75.9% |
| Application Example 3 | Passed the acupuncture and hotbox tests | 83.1% | 85.3% |
| Application Example 4 | Passed the acupuncture and hotbox tests | 95.3% | 81.6% |
| Application Example 5 | Passed the acupuncture and hotbox tests | 95.2% | 88.3% |
| Application Example 6 | Passed the acupuncture and hotbox tests | 85.3% | 75.7% |
| Application Example 7 | Passed the acupuncture and hotbox tests | 85.3% | 75.8% |
| Application Example 8 | Passed the acupuncture and hotbox tests | 95.6% | 82.4% |
| Application Example 9 | Passed the acupuncture and hotbox tests | 95.7% | 85.8% |
| Application Example 10 | Passed the acupuncture and hotbox tests | 75.3% | 65.2% |
| Application Example 11 | Passed the acupuncture and hotbox tests | 75.7% | 65.8% |
| Comparative Application Example 1 | Passed the acupuncture and hotbox tests | 65.3% | 55.8% |
| Comparative Application Example 2 | Failed to pass | 95.9% | 94.1% |

It can be seen from Table 1 that when applied to semi-solid batteries, the electrolyte material provided in the present disclosure has excellent flame retardant performance, as well as excellent cycle performance and rate capability.

By comparing Examples 1 and 4-7, it can be found that when the melt flow index of the polymer electrolyte was in the range of 150-250°C (Examples 1, 4 and 5), the battery had better flame retardant performance, cycle performance and rate capability.

By comparing Examples 1 and 8-11, it can be found that when the mass proportion of the flame retardant was 5-20% in the electrolyte material (Examples 1, 8 and 9), the battery had better flame retardant performance, cycle performance and rate capability.

## Claims

1. An electrolyte material, comprising a core and a shell coated outside the core, wherein the core comprises flame retardant particles, and the shell comprises an ion-conducting polymer;
the ion-conducting polymer comprises a combination of a lithium salt and a polymer electrolyte.

2. The electrolyte material according to claim 1, wherein a mass proportion of the flame retardant is 5-20% in the electrolyte material.

3. The electrolyte material according to claim 1 or 2, wherein a diameter of the core is 0.5-10 µm.

4. The electrolyte material according to any one of claims 1 to 3, wherein a thickness of the shell is 100-500 nm.

5. The electrolyte material according to any one of claims 1 to 4, wherein the flame retardant comprises any one or a combination of at least two of trimethyl phosphate, triethyl phosphate, tributyl phosphate, tris(2,2,2-trifluoroethyl) phosphite, triphenyl phosphate, phosphite or phosphazene flame retardant materials.

6. The electrolyte material according to any one of claims 1 to 5, wherein the lithium salt accounts for 1-20% of a mass of the ion-conducting polymer.

7. The electrolyte material according to any one of claims 1 to 6, wherein the lithium salt comprises any one or a combination of at least two of lithium perchlorate, lithium bis(trifluoromethanesulfonyl)imide, lithium bis (fluorosulfonyl)imide, lithium bis(oxalato)borate or lithium tetrafluoroborate.

8. The electrolyte material according to any one of claims 1 to 7, wherein a melting temperature of the polymer electrolyte is 150-250°C.

9. The electrolyte material according to any one of claims 1 to 8, wherein the polymer electrolyte comprises any one or a combination of at least two of polyethylene oxide, polyacrylonitrile, polymethyl methacrylate, polyvinylidene difluoride, polyethylene glycol, polyethylene glycol diacrylate or polyvinylene carbonate.

10. The electrolyte material according to any one of claims 1 to 9, further comprising an emulsifier existing between the flame retardant particles and the ion-conducting polymer.

11. The electrolyte material according to claim 10, wherein the emulsifier is deposited on the surface of the flame retardant particles.

12. The electrolyte material according to claim 10 or 11, wherein the emulsifier comprises any one or a combination of at least two of polyethylene glycol, sodium dodecyl sulfonate, fatty acid polyoxyethylene ether, Gum Arabic, sodium alkylbenzenesulfonate, isostearic acid monoglyceride, a polyethylene oxide-polypropylene oxide copolymer, cetyltrimethylammonium bromide, a styrene maleic anhydride copolymer, a nonionic micro-emulsifier paraffin, a cationic micro-emulsifier paraffin, an anionic emulsifier paraffin, OP-10, OP-15, peregal O-10, a water-in-oil emulsifier of waste engine oil, a water-in-oil emulsifier of diesel oil or a water-in-oil emulsifier of animal-plant oil.

13. A preparation method of the electrolyte material according to any one of claims 1 to 12, comprising: mixing a flame retardant dispersion liquid, a polymer monomer, a lithium salt and an initiator, and dispersing the same, so as to obtain a mixed solution, and stirring and heating the mixed solution, and keeping the mixed solution at a temperature to react, so as to obtain the electrolyte material.

14. The preparation method according to claim 13, wherein the preparation method is performed in an argon atmosphere.

15. The preparation method according to claim 13 or 14, further comprising using a reflux condensing device.

16. The preparation method according to any one of claims 13 to 15, wherein a temperature is 80-90°C for the dispersing.

17. The preparation method according to any one of claims 13 to 16, wherein the initiator comprises at least one of azobisisobutyronitrile or azobisisoheptanenitrile.

18. The preparation method according to any one of claims 13 to 17, wherein, based on that a total mass of the polymer monomer, the lithium salt and the initiator is 100%, a mass proportion of the polymer monomer is 70-90%.

19. The preparation method according to any one of claims 13 to 18, wherein, based on that a total mass of the polymer monomer, the lithium salt and the initiator is 100%, a mass proportion of the lithium salt is 1-20%.

20. The preparation method according to any one of claims 13 to 19, wherein, based on that a total mass of the polymer monomer, the lithium salt and the initiator is 100%, a mass proportion of the initiator is 0.1-1%.

21. The preparation method according to any one of claims 13 to 20, wherein a temperature is 60-80°C for the heating.

22. The preparation method according to any one of claims 13 to 21, wherein a time is 2-5 h for the keeping the mixed solution at a temperature to react.

23. The preparation method according to any one of claims 13 to 21, wherein a preparation method of the flame retardant dispersion liquid comprises: mixing a flame retardant and a dispersant, and dispersing the same, so as to obtain the flame retardant dispersion liquid.

24. The preparation method according to claim 23, wherein a temperature is 20-30°C for the dispersing in the preparation method of the flame retardant dispersion liquid.

25. The preparation method according to any one of claims 13 to 24, wherein a particle size of the flame retardant is 0.1 µm-10 µm in the flame retardant dispersion liquid.

26. The preparation method according to any one of claims 13 to 25, further comprising: before the mixing a flame retardant dispersion liquid, a polymer monomer, a lithium salt and an initiator, emulsifying the flame retardant dispersion liquid.

27. The preparation method according to claim 26, wherein a method for the emulsifying comprises: adding an emulsifier solution to the flame retardant dispersion liquid, and performing emulsification.

28. The preparation method according to claims 13 to 27, further comprising: before the mixing a flame retardant dispersion liquid, a polymer monomer, a lithium salt and an initiator, adjusting pH of the flame retardant dispersion liquid to 3-4.

29. The preparation method according to claim 28, wherein a method for the adjusting pH comprises performing adjusting by using an acetic acid solution.

30. The preparation method according to any one of claims 13 to 29, further comprising: after the keeping the mixed solution at a temperature to react, performing drying, so as to obtain an electrolyte material in a form of powder particles.

31. The preparation method according to claim 30, wherein the drying is performed in an argon atmosphere.

32. The preparation method according to claim 30 or 31, wherein a temperature is 70-90°C for the drying.

33. The preparation method according to any one of claims 30 to 32, wherein a time is 20-30 h for the drying.

34. The preparation method according to any one of claims 30 to 33, further comprising: storing the electrolyte material in a form of powder particles in an argon atmosphere.

35. The preparation method according to claim 13, wherein the preparation method comprises the following steps:
(1) mixing a flame retardant and a dispersant, and dispersing the same at 20-30°C, so as to obtain a flame retardant dispersion liquid in which the flame retardant has a particle size of 0.1 µm-10 µm;
(2) adding an emulsifier solution to the flame retardant dispersion liquid, and performing emulsification treatment by using distilled water;
(3) adjusting pH of the flame retardant dispersion liquid to 3-4 by using a 10% acetic acid solution;
(4) mixing the flame retardant dispersion liquid, a polymer monomer, a lithium salt and an initiator, and dispersing the same at 80-90°C, so as to obtain a mixed solution in which the polymer monomer has a content of 70-90%, the lithium salt has a content of 10-30%, and the initiator has a content of 0.2-1%;
(5) stirring and heating the mixed solution to 60-80°C, and keeping the mixed solution at a temperature to react for 2-5 h, so as to obtain the electrolyte material;
(6) drying the material at 70-90°C for 20-30 h, so as to obtain an electrolyte material in a form of powder particles;
the steps (1) to (6) are all performed in an argon atmosphere.

36. An electrode slurry comprising the electrolyte material according to any one of claims 1 to 12.

37. An electrode sheet the surface of which is coated with the electrolyte slurry according to claim 36.

38. A battery cell comprising the electrode sheet according to claim 37.

39. A battery comprising the battery cell according to claim 38.

40. Use of the battery according to claim 39, wherein the battery is used in an electronic product or a new energy vehicle.
